# EUROPEAN PATENT APPLICATION

(11) **EP 3 469 913 A1**
(43) Date of publication of application: **17.04.2019**
(21) Application number: 17196159.2
(22) Date of filing: 12.10.2017
(51) Int. Cl.: A23F 5/20, A61K 8/67

(54) **PROCESS FOR PRODUCING NICOTINIC ACID**

(71) Applicant: Zwickenpflug, Wolfgang, 82057 Icking (DE)
(72) Inventor: Zwickenpflug, Wolfgang, 82057 Icking (DE)
(74) Representative: Müller-Boré & Partner Patentanwälte PartG mbB

(57) **Abstract**

The present invention relates to methods for producing nicotinic acid (niacin, vitamin B₃, NA), comprising the step of subjecting myosmine (MYO) to a Maillard-type reaction. The present invention further relates to respective methods for increasing the amount of nicotinic acid in a processed biological material, comprising the steps of adding myosmine to a sugar-containing biological material and subjecting the same to a Maillard-type reaction during processing, as well as to foodstuffs obtainable by said methods.

## Description

The present invention relates to methods for producing nicotinic acid (niacin, vitamin B₃, NA), comprising the step of subjecting myosmine (MYO) to a Maillard-type reaction. The present invention further relates to respective methods for increasing the amount of nicotinic acid in a processed biological material, comprising the steps of adding myosmine to a sugar-containing biological material and subjecting the same to a Maillard-type reaction during processing, as well as to foodstuff/feedstuff obtainable by said methods.

Nicotinic acid (NA), named also niacin or vitamin B₃, is widespread in nature and scientific data confirm that NA is provided in biochemical conversion of the essential amino acid tryptophan. Existence of NA represents a prerequisite for biochemical formation of the essential pyridine nucleotides NAD⁺ and NADP⁺/NADPH, NAAD⁺/NAADH and underscores the importance of the substance for all biological systems.

Moreover, NA is used in medical treatment of pellagra and hyperlipidemia diseases. Large doses of the substance are sometimes prescribed to combat high blood pressure, to treat schizophrenia and other mental illnesses and also to lower blood cholesterol levels. Considerable significance presents the involvement of vitamin B₃ as additive in animal feedstuff and admixture in foodstuff of human diet.

It follows that worldwide inquiry of vitamin B₃ increases and development of production is seeking for new synthetic and biotech methods. Recently, a new *in vitro* synthesis of NA during peroxidation of MYO was reported (Zwickenpflug, W. et al.; J. Agric. Food Chem., 64; 2016; pp. 178-184). The procedure describes the relatively rapid formation of NA during oxidative processes of the alkaloid, which demands degradation of the 3-pyrrolidine-pyridine structure to 3-pyridylmethanol and subsequent oxidation to vitamin B₃. Now, the intention is to establish a conversion process using more gentle reaction conditions to operate the 3-pyrrolidine-pyridine structure of MYO to smaller degradation intermediates.

Accordingly, the technical problem underlying the present invention is to provide methods for the production of NA, the application of respective methods in the processing of biological materials such as foodstuff/feedstuff, and respective biological materials.

The solution to the above technical problem is achieved by the embodiments characterized in the claims.

In particular, in a first aspect, the present invention relates to a method for producing nicotinic acid (NA; niacin, vitamin B₃), comprising the step of subjecting myosmine (MYO) to a Maillard-type reaction.

The alkaloid myosmine (3-(1-pyrrolin-2yl)-pyridine; MYO) was detected as secondary material especially in plant species of *Nicotiana rustica* and allocated to tobacco, tobacco products and tobacco smoke. At the begin of the 21^{st} century, the substance was found in many food ingredients and foodstuff and the range of its occurrence in biological materials became apparent, which is not completely known until today. Oxidative processes executed with MYO, as well in rat experiments as *in vitro* peroxidations, yielded the intermediate 3-pyridylmethanol, which presents the precursor of nicotinic acid.

The Maillard reaction performs a non-enzymatic glycation procedure which converts amines to glycosylamines due to the reductive capacity of glucose. Conversion to Schiff bases and rearrangement to Amadori products are further reaction pathways of the glycosylamines. Dependent on different stability criteria and the reaction conditions, mainly the temperature, glycosylamines may decay partly to reactive intermediates or to stable end-products. It had been postulated that glycosylation of MYO could possibly perform unstable intermediates which may convert to smaller 3-pyridylderivatives and generate on this way useful intermediates for vitamin B₃ synthesis.

As used herein, the term "Maillard-type reaction" refers to any non-enzymatic reaction wherein MYO is reacted with a reducing agent under influence of heat. In preferred embodiments, the reducing agent is a sugar, preferably an aldose, more preferably a hexoaldose or a pentoaldose, most preferably glucose.

The MYO to be used in the methods of the present invention can be in pure form or can be comprised in a biological material. Preferred biological materials in this respect are selected from the group consisting of processed or unprocessed wheat, millet, potatoes, cocoa, coffee, tomatoes, carrots, pineapples, kiwi, apples, pumpkin seeds, tobacco, maize, milk, rice, and nuts. In a particular embodiment, the biological material is processed rice, particularly so-called extruder rice, i.e., rice analogue compositions comprising rice grains, rice grain fragments, rice glumes, and/or rice glume fragments that are produced by extrusion technology (Mishra, A. et al.; International Journal of Food Science & Technology, 47; 2012; pp. 1789-17997).

The methods of the present invention can further comprise the step of isolating NA from the reaction mixture. In this context, the term "reaction mixture" as used herein is not particularly limited and comprises liquid as well as solid matrices. Means for isolating NA from respective matrices are not particularly limited and are known in the art.

Provided the reaction conditions of the Maillard-type reaction are of a certain type (cf. below), aroma compounds are produced as a byproduct of NA. In such cases, the methods of the present invention can further comprise the step of isolating said aroma compounds from the reaction mixture. Means for isolating aroma compounds from respective reaction mixtures are not particularly limited and are known in the art.

The Maillard-type reaction according to the present invention is preferably performed at a temperature of between 120 and 200 °C, for a duration of 0.5 to 10 hours, at a pH of 6 to 9. Regarding the temperature, temperatures of 160 to 200 °C, more preferably 180 to 200 °C, more preferably 190 to 200°C, are particularly preferred. Regarding the duration, durations of 1 to 10 hours, more preferably 3 to 10 hours, more preferably 3 to 8 hours, more preferably 3 to 6 hours are preferred. However, the person skilled in the art will recognize that reaction temperature and duration correlate reciprocally, *i.e*., the higher the temperature, the shorter the duration needs to be and *vice versa.* Regarding the pH, a preferred pH is about 7.5.

In case the production of aroma compounds as byproducts of NA is of interest, preferred temperature ranges are 120 to 160 °C, more preferably 130 to 150 °C, e.g. 140 °C.

In a second aspect, the present invention relates to a method for increasing the amount of nicotinic acid (NA; niacin, vitamin B₃) in a processed biological material, comprising the steps of
(a) adding myosmine (MYO) to a sugar-containing biological material prior to processing, and
(b) subjecting said sugar-containing biological material to which myosmine has been added to a Maillard-type reaction during processing.

In this aspect, all relevant definitions and limitations as defined for the first aspect of the present invention apply in an analogous manner.

In preferred embodiments, the sugar-containing biological material is a foodstuff or feedstuff. In preferred embodiments, the foodstuff or feedstuff is selected from the group consisting of cereals, snacks, nuts (such as hazelnut, peanut, cashew, pistachio), almonds, pumpkin seeds, indian corn (popcorn), maize, soya; specimen of corn (such as barley, rye, oat, wheat) cocoa beans; milk and its products; fruits (thermal dried; such as apple, plum, fig, banana, date, crape, cranberry), potatoes and products of potatoes (such as potato chips). Further, the sugar is preferably preferably an aldose, more preferably a hexoaldose or a pentoaldose, most preferably glucose.

The MYO to be added to the sugar-containing biological material in step (a) of the above method can be in pure form or can be comprised in a biological material. Preferred biological materials in this respect are as defined above.

In specific embodiments, during processing in step (b) of the above method, aroma compounds are produced in said sugar-containing biological material as a byproduct of NA.

The reaction conditions of the Maillard-type reaction performed during processing in step (b) of the above method are preferably as defined above for the first aspect of the present invention. This applies also to scenarios wherein the production of aroma compounds is of interest.

In preferred embodiments, processing in step (b) of the above method comprises cooking, baking, roasting, and/or frying the sugar-containing biological material.

In a third aspect, the present invention relates to a foodstuff or feedstuff that is obtainable by the above method according to the second aspect of the present invention.

In this aspect, all relevant definitions and limitations as defined for the first and/or second aspect of the present invention apply in an analogous manner.

The term "about" as used herein is intended to denote a variation of the specified value by ± 10%, preferably ± 5%, more preferably ± 1%.

The figures show:
Figure 1:
   **A:** Chromatogram of myosmine (MYO) standard (retention time at 35.9 min) with corresponding UV-spectrum of 230 nm ± 1nm and 264 nm ± 1nm. **B:** Chromatogram of vitamin B₃ (NA) standard (retention time at 5.2 min) with corresponding UV-spectrum of 261 nm (triple peak: 256, 261, 268 nm ± 1 nm).
Figure 2:
   Formation of vitamin B₃ and decrease of MYO at a temperature range of 110-140 °C within the reaction time of 3 h is illustrated.
Figure 3:
   Conversion of MYO to NA at 140 °C in a time period of 3 h is illustrated. The retention time of 21-30 min marked with "aroma" represents a special fraction of aroma compounds.
Figure 4:
   Formation of vitamin B₃ at a temperature range of 150-180 °C and depending on degradation of MYO within the reaction time of 3 h.
Figure 5:
   Solution of the 160 °C reaction temperature of the Maillard reaction of MYO within the reaction time of 3 h is illustrated.
Figure 6:
   The 160 °C reaction temperature of the Maillard reaction of MYO in the time of 21 h is illustrated.
Figure 7:
   The reaction of MYO to NA at 180 °C within a time period of 3 h is represented.
Figure 8:
   The reaction of MYO to NA at 180 °C within a time period of 8 h is represented.
Figure 9:
   The reaction solution of MYO conversion to NA at 190 °C after 1.5 h reaction time is shown.
Figure 10:
   The reaction solution of MYO conversion to NA at 190 °C after 0.5 h reaction time is shown.
Figure 11:
   The reaction solution of MYO conversion to NA at 190 °C after 1.5 h reaction time is shown.
Figure 12:
   The reaction solution of MYO conversion to NA at 190 °C after 5.5 h reaction time is shown.
Figure 13:
   Formation of vitamin B₃ and degradation of MYO at 200 °C in a reaction time of 3 h.
Figure 14:
   The mass spectra of the derivatized reaction fraction of vitamin B₃ (A) in comparison to the derivatized standard solution of the NA (B) is illustrated. Both spectra are identical to the NIST (National Institute of Standards and Technology) library and represent with the m/z of 137 the molecular peak of the methylnicotinate derivative.
Figure 15:
   Proposed reaction pathway of MYO conversion to NA.

The present invention will be further illustrated in the following examples without being limited thereto.

### Examples

### Experimental procedures:

Experimental procedures were performed as known in the art and important reaction details are briefly described as follows.

Samples were filled in high temperature stable brown glass tubes with metal screwing. The metal cups were equipped with flexible teflon seal and placed in a special heating device in a drying oven. In all reaction experiments, 10 mM of MYO were applied which were incubated with equal amount of phosphate buffer and two fold amount of 10 mM glucose solution. Preliminary reaction assays were executed at pH values of 5, 6, and 7.5 of phosphate buffer and at different temperatures in a range of 100 to 280 °C. Formation of NA was investigated at a constant reaction time with increasing temperatures and additionally at different reaction times with constant temperatures. The samples were drawn by the hour, half hour or after complete reaction time. The sample solutions were cooled to room temperature and centrifuged at 12,0000 rpm for 4 min. Aliquots of the supernatant were analyzed directly by HPLC-DAD (high pressure liquid chromatography - diode array detection) analysis. Identification of NA was performed by HPLC-DAD as known in the art in comparison with known standard solutions (co-chromatography).

Conversion of vitamin B₃ in the reactions was calculated by the analyzed area of HPLC-peak in comparison with HPLC-peak areas of an external calibration curve of vitamin B₃. To confirm and characterize the existence of vitamin B₃, the reaction solution was fractionated and derivatized to the corresponding methylester, the resulting methyl-nicotinate, as known in the art. The methyl-nicotinate was analyzed by GC-MS as known in the art and the retention time and mass spectra of samples were matched with standard solutions. The resulting spectral data were compared with reference data as cited in the literature. Prior to essays, the purity of MYO was checked by GC-MS and compared to literature data.

### Example 1:

### Vitamin B₃ production

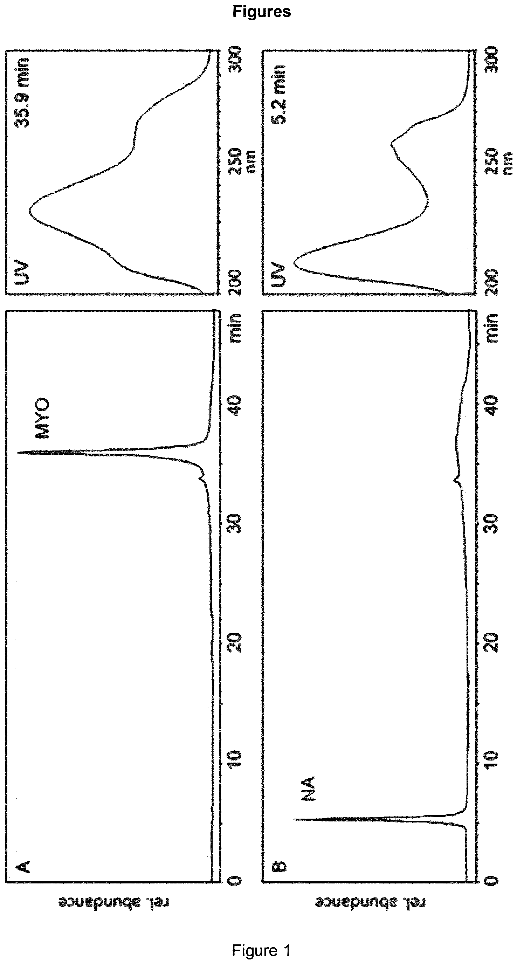

MYO was detected in sample and standard solutions with the HPLC-retention time of 35.6 ± 0.4 min with substance specific UV spectrum of 230 ± 1 nm and 264 ± 1 nm and vitamin B₃ of 5.6 ± 0.7 min with substance specific UV spectrum of 261 ± 1 nm (triple peak: 256, 261, 268 nm ± 1 nm), as shown in Figure 1.

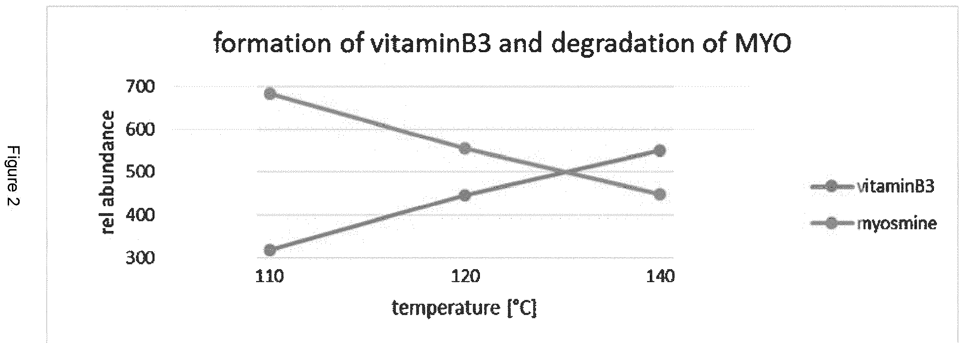

The effect of non-enzymatic browning reaction between amines and sugars (Maillard reaction) was observed in all reactions. Temperatures of 90-120 °C showed yellow color of the reaction solution and rising the temperature to 140-280 °C, the color changed to brown. In all experiments the relationship of NA formation and accompanied MYO degradation was clearly observable. Temperatures lower than 100 °C showed only traces of conversion of MYO to NA. Reaction time of 21 h at 100, 110 and 120 °C yielded only small turnover rate of NA of about 6-8%. The temperature range of 110 up to 140 °C within 3 h demonstrates the tendency of linear decrease of amount of MYO and contemporary linear increase rate of vitamin B3, as presented in Figure 2.

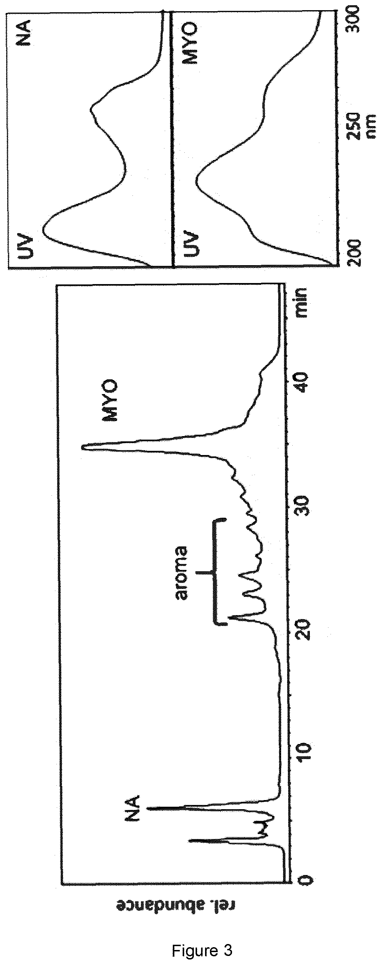

After 3 h reaction time at a final temperature of 140 °C, the formation of NA and remaining concentration of MYO is presented in Figure 3.

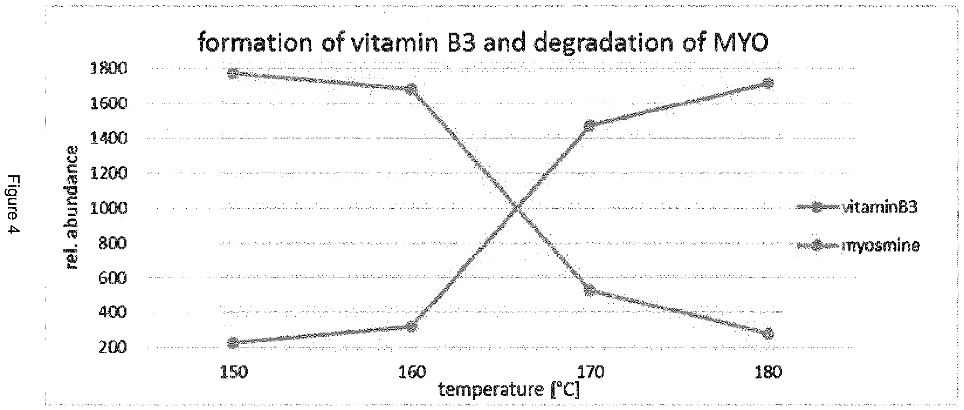

Further influence of increasing the temperature on formation of vitamin B₃ was investigated in the temperature range of 150-180 °C. Increase of NA and decrease of MYO within a reaction time of 3 h was registered and is demonstrated in Figure 4.

As shown in Figure 4, the formation of vitamin B₃ ramped at temperature of 160-170 °C and this observed effect gave rise to further investigation at this temperature level of 160 °C.

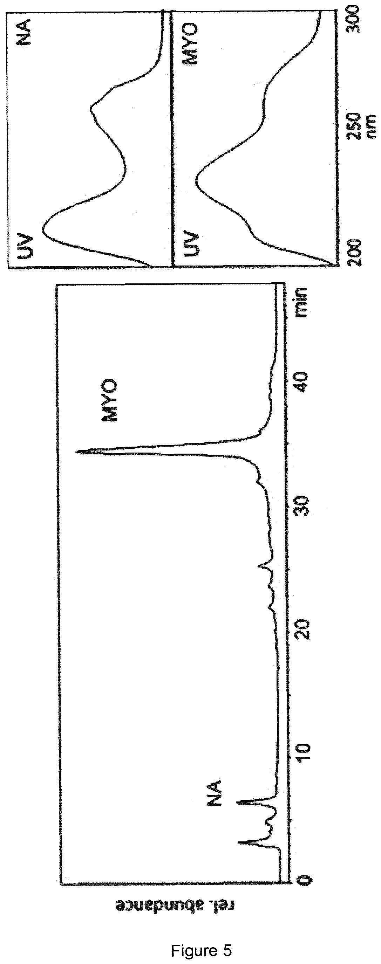

Analysis of reaction solution of 3 h at 160 °C showed formation of small amounts of NA and remaining part of MYO as illustrated in Figure 5.

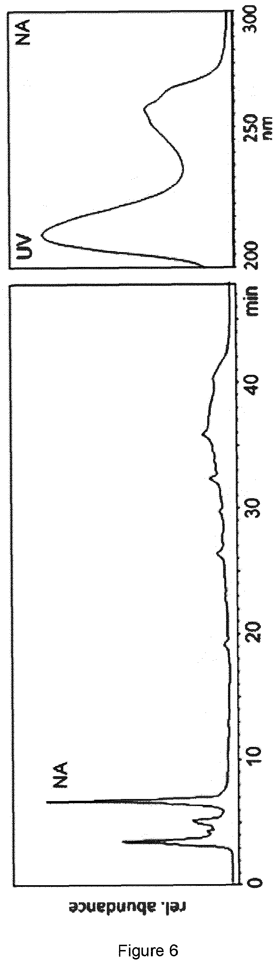

The long time attempt over a period of 21 h yielded at this temperature merely traces of MYO and in good performance of NA, as shown in Figure 6.

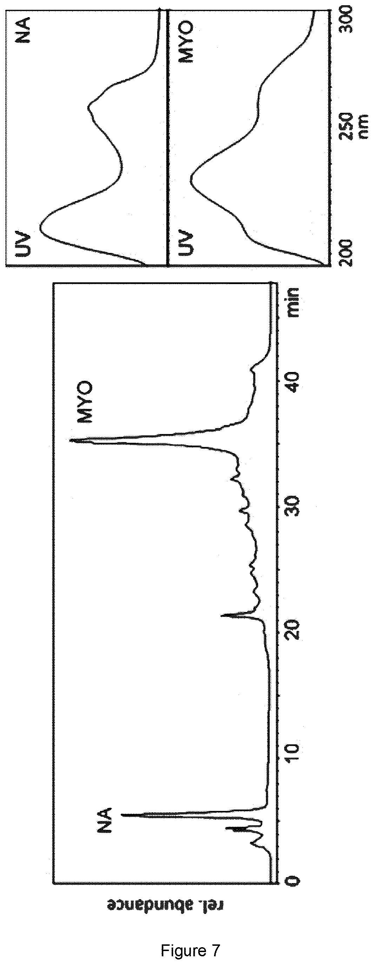

An increase to 180 °C reaction temperature yielded similar HPLC chromatograms of the reaction-solutions as shown previously in Figures 5 and 6. Reaction time of 3 h yielded NA and remaining MYO as shown in Figure 7, whereupon the reaction time of 8 h showed only traces of MYO and high amount of NA (Figure 8).

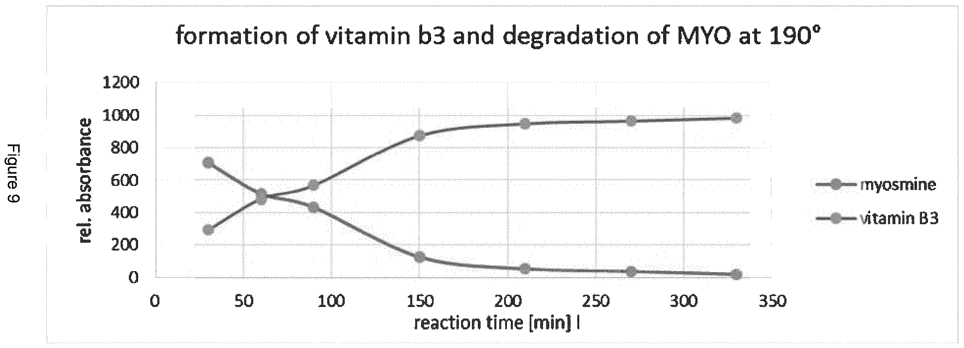

Conversion of MYO to vitamin B₃ at higher reaction temperature of 190 °C and constant reaction time of 5.5 h was performed. The results showed an increase of the rate of NA concomitantly with a decrease of the amount of MYO, as presented in Figure 9.

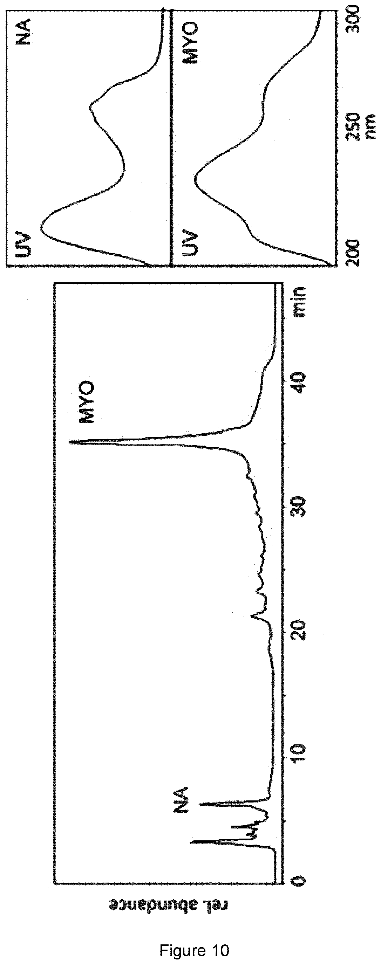

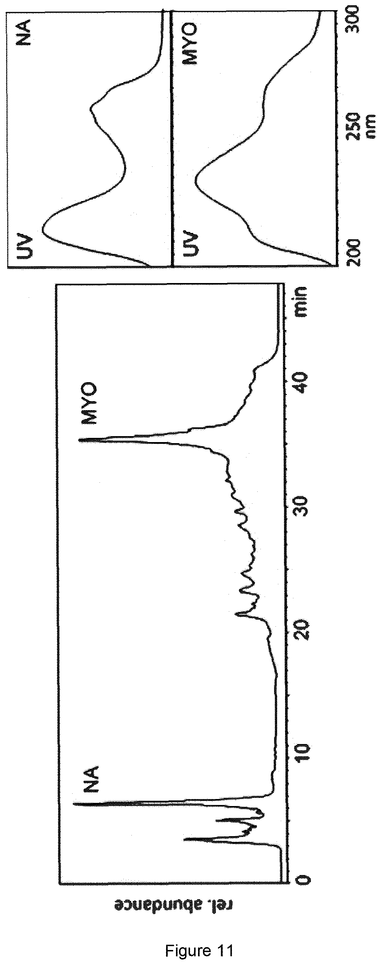

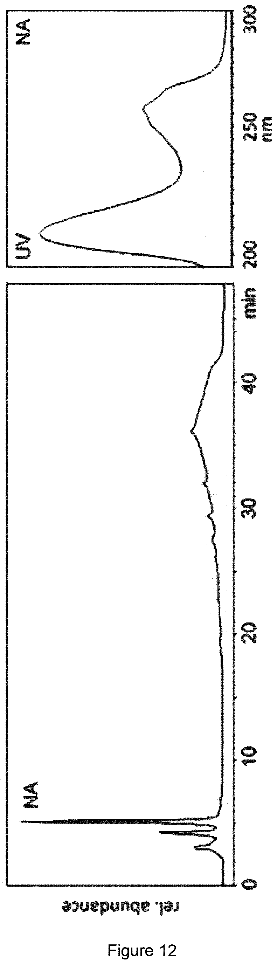

After 0.5 h, only small formation of NA was detected as illustrated in Figure 10. 1.5 h of reaction time represented the increase of NA formation and degradation of MYO as shown in Figure 11. The reaction time of 5.5 h performed most conversion of MYO to NA at this temperature, as illustrated in Figure 12.

The uprising of the reaction temperature to 200 °C yielded an identical reaction profile as detected at 190 °C. The only difference may be given by the faster degradation of MYO and formation of NA. Both temperature profiles showed the constant remaining amount of NA due to the thermal stability of the NA in the reaction vials.

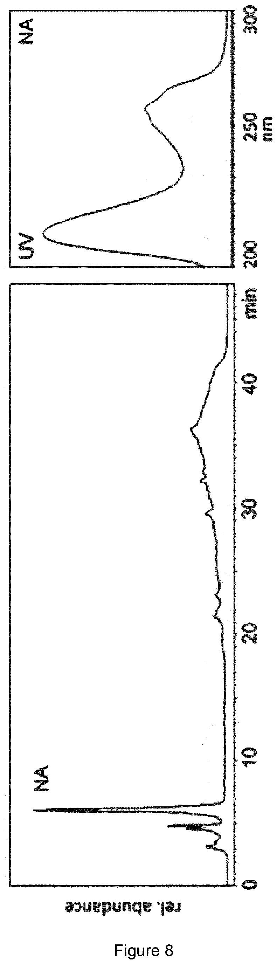

In all trials, derivatives and degradation products of MYO known from earlier metabolic and peroxidation studies were not detected in the reaction solutions. The experiments document clearly the temperature- and time-dependent conversion of MYO to NA. In Figures 5 and 6, the effect of enhancement of NA formation at constant temperature due to prolongation of reaction time is illustrated. This effect is observable also at higher temperatures as shown in Figures 8 and 12.

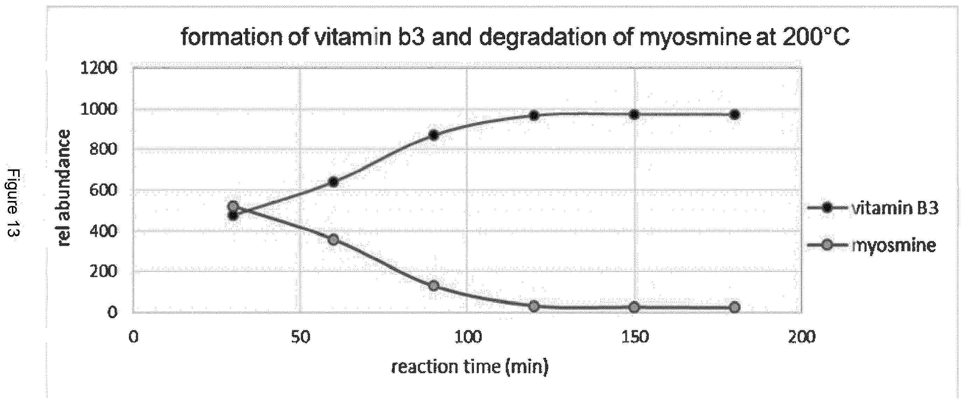

It follows that the highest rate of NA synthesis was found at pH 7.5 with the temperature-range of 180-200 °C, employing the reaction time of 100-150 min. as demonstrated in Figures 9 and 13. The long term test with a reaction time of 21 h and 160 °C yielded also an enhancement of NA formation, as shown in Figure 6. Formation of vitamin B₃ at lower reaction temperatures seems possible, provided that the reaction time is long enough. It should be noted that reaction conditions higher than 190-200 °C were difficult to handle in the experiments. The teflon seal of reaction vessels should compensate the pressure problems which occur with increasing heat level but the loss of liquid is not absolutely avoidable. The liquid may escape through the septum seal and therefore influence the real values of vitamin B₃ and MYO. Due to the high boiling point and thermal stability of MYO and vitamin B₃, their escape out of the reaction solution in glass tube may be of minor relevance. In case of loss of the reaction solution, the residue was resuspended in buffer solution to the volume of the original conditions. Because if loss of NA would occur at reaction temperatures of 200° C and higher, the decrease of amount of NA should be observable. At 190 °C and 200 °C, the initially observed increase of formation of NA remained stable as shown in Figures 9 and 13, and confirm the tightness of the reaction tubes at these temperatures. At a temperature of 280 °C, the reaction device is no longer practicable because the teflon seals become brittle and the strong boiling of reactants in the glass tubes causes blow-out through the septa. At 280 °C, only small amounts of NA were detected and MYO recovered only in traces.

Performance of the Maillard reaction at lower pH values than 7.5 resulted in reduction of the formation of vitamin B₃. Reaction conditions lower than pH 6 yielded to reduction of rate of NA and at pH 5 the formation of precipitation in the reaction solution was observed but the material was not further investigated.

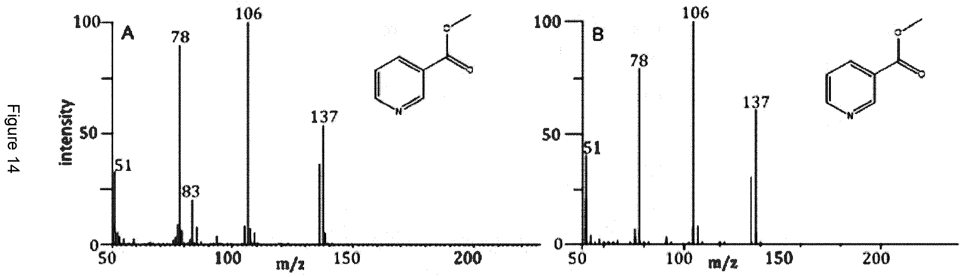

Existence of vitamin B₃ in sample extracts and standard solutions was confirmed in accordance with the data of MS-spectra reported in the literature. In Figure 14, mass spectra of vitamin B₃ and the literature reference is shown.

The rate of yield of vitamin B₃ was determined with 84% at 200 °C after 1 h. The yield at 190 °C within 1 h was 80%. Within 5.5 h reaction time at 190 °C, an amount of 75% of NA was detected, whereupon problems with tightness of the reaction equipment at this temperatures, as outlined above, may have an adverse effect on the yield.

### Example 2:

### Production of aroma compounds

The unexpected effect of occurrence of aroma compounds was observed during vitamin B₃ production and therefore this phenomenon as part of the reaction is described.

There were no aroma compounds detectable when only glucose and buffer without MYO were subjected to the Maillard reaction. MYO has been reported as having an aroma of hazelnut and peanuts. During the temperature increase of the Maillard procedure, the odor of the reaction solution changed from hazelnut and peanut odor to popcorn and rice aroma. The effect started at 120 °C with low intensity and was mainly registered in the temperature range of 130-180 °C. In Figure 3, peak shape of the olfactory fraction in the retention time window of 20-32 min is shown. The assumption was that the relevant HPLC peaks with retention times of 21-23 min and the smaller peak cluster group of 25 min may be responsible for this aroma effect.

HPLC analysis were fractionated in the relevant time window and the olfactory test of the eluent confirmed the character of popcorn and rice aroma. At 190 °C, the aroma effect was noticed during the reaction time of 0.5-1.5 h as shown in Figures 10 and 11. At 5.5 h of reaction time, the peaks were no more detectable by HPLC analysis as illustrated in Figure 12 and the fraction yielded no resembling odor of popcorn. When the reaction temperature was increased to 200 °C within 90 min, the peaks were only registered in traces and after 120 min, the peaks in time window of 21-32 min of the HPLC runs were no longer detectable. The HPLC-peaks of 21-23 min may contain 3-pyridyl-pyrrole degradation products as mentioned above, which possibly convey olfactory properties.

The experiments clearly show that MYO subjected to Maillard reaction yielded under experimental reaction conditions, as demonstrated above, vitamin B₃. The new synthesis enables enhancement of the rate of yield of vitamin B₃ up to 84% and additionally offers the important opportunity to generate the aroma effect of popcorn and rice.

### Discussion:

The importance of vitamin B₃ in food processing increases rapidly. The source of nicotinic acid in biological material is determined by its conversion rate of the essential amino acid tryptophan and presumably under peroxidation of MYO, as reported recently. Maillard reaction with MYO implies an alternative synthesis to the peroxidation procedure. In many chemical engineering processes of vitamin B₃ formation, including biotechnical procedures, the 3-pyridyl-derivatives like 3-pyridylmethanol or 3-pyridylnitrile are used as educts which demand primarily organic synthetic manipulations.

An important advantage of conversion of MYO by Maillard reaction resides in the fact that vitamin B₃ can be produced directly by thermal manipulation in foods which contain the alkaloid and must not be admixed as food additive previously. Therefore, the procedure may offer opportunities to control the extent and performance of NA formation by temperature and reaction time. It is important to note that food or foodstuff containing MYO may be manipulable relating to their content of vitamin B₃. MYO as admixture to food offers additional possibilities to enlarge the amount of vitamin B₃ by use of thermal manipulation. Preservation of food using heat processing is one of the most important subjects in nutrition industry. Most of roasting processes are reported to perform at temperatures of 120°-190 °C. The application of thermal processes in food preparation, roasting, cooking and baking may be seen under new viewpoints due to the occurrence of MYO in many foodstuff, especially in wheat, maize, rice and nuts and the new discovered possibility to convert the alkaloid partly or completely to vitamin B₃.

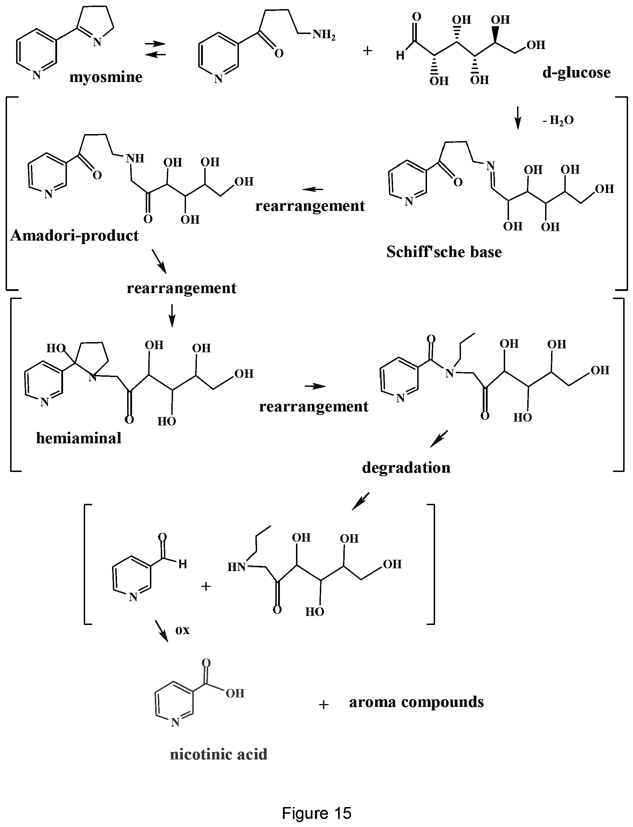

The browning effect and aroma effect, which were detected in this reaction procedure may possibly present new technical perspectives, helpful information and contribute to enlargement of knowledge in application of food roasting processes of hazelnut, peanut and pumpkin seed. During peroxidation of MYO, the precursor of vitamin B₃ generation, the 3-pyridylmethanol was identified and underlines the importance of 3-pyridylderivatives, also the 3-pyridylmethanol or 3-pyridylnitrile as prerequisites in vitamin B₃ production as outlined above. The Maillard reaction with MYO is assumed to employ also similar 3-pyridyl-intermediate precursors to vitamin B₃ synthesis as shown in Figure 15. In reference to the reported procedures concerning vitamin B₃ synthesis including enzymatic procedures and industrial engineering processes which accomplish 3-pyridylderivatives, this non-enzymatic reaction may be an alternative synthesis with scientific and practical potential.

In summary, the Maillard reaction with the alkaloid MYO realizes a qualified rate of vitamin B₃ performance, preferably in a temperature range of 120°-200 °C depending on the reaction time of 0.5-10 h. The reaction operates without any further addition of chemicals and represents a new non-enzymatic synthesis of vitamin B₃ which could be produced during thermal treatment of food in high bioavailable rate. Synthesis of MYO to NA offers new perspectives and the practicable advantage of concomitant formation of aroma of popcorn and rice opens new dimensions in thermal treatment of food.

## Claims

1. A method for producing nicotinic acid (niacin, vitamin B₃), comprising the step of subjecting myosmine (MYO) to a Maillard-type reaction.

2. The method of claim 1, wherein said myosmine is comprised in a biological material.

3. The method of claim 2, wherein said biological material is selected from the group consisting of processed or unprocessed wheat, millet, potatoes, cocoa, coffee, tomatoes, carrots, pineapples, kiwi, apples, pumpkin seeds, tobacco, maize, milk, rice, and nuts.

4. The method of any one of claims 1 to 3, wherein the reaction partner in said Maillard-type reaction is a sugar, preferably glucose.

5. The method of any one of claims 1 to 4, further comprising the step of isolating said nicotinic acid from the reaction mixture.

6. The method of any one of claims 1 to 5, wherein aroma compounds are produced as a byproduct of nicotinic acid.

7. The method of any one of claims 1 to 6, wherein said Maillard-type reaction is performed at a temperature of between 120 and 200 °C, for a duration of 0.5 to 10 hours, at a pH of 6 to 9.

8. A method for increasing the amount of nicotinic acid (niacin, vitamin B₃) in a processed biological material, comprising the steps of
(a) adding myosmine (MYO) to a sugar-containing biological material prior to processing, and
(b) subjecting said sugar-containing biological material to which myosmine has been added to a Maillard-type reaction during processing.

9. The method of claim 8, wherein said biological material is a foodstuff or feedstuff.

10. The method of claim 8 or claim 9, wherein said sugar is glucose.

11. The method of any one of claims 8 to 10, wherein the myosmine added in step (a) is comprised in a biological material, wherein said biological material is preferably selected from the group consisting of processed or unprocessed wheat, millet, potatoes, cocoa, tomatoes, carrots, pineapples, kiwi, apples, pumpkin seeds, tobacco, maize, milk, rice, and nuts.

12. The method of any one of claims 8 to 11, wherein during processing in step (b), aroma compounds are produced in said sugar-containing biological material as a byproduct of nicotinic acid.

13. The method of any one of claims 8 to 12, wherein processing in step (b) is performed at a temperature of between 120 and 200 °C, for a duration of 0.5 to 10 hours, at a pH of 6 to 9.

14. The method of any one of claims 8 to 13, wherein processing in step (b) comprises cooking, baking, roasting or frying said biological material.

15. A foodstuff or feedstuff, obtainable by a method of any one of claims 8 to 14.
